# EUROPÄISCHE PATENTSCHRIFT

(11) **EP 1 799 783 B1**
(45) Veröffentlichungstag und Bekanntmachung des Hinweises auf die Patenterteilung: **24.03.2010**
(21) Anmeldenummer: 05794488.6
(22) Anmeldetag: 29.09.2005
(51) Int. Cl.: C09D 175/16, C08G 18/42, C08G 18/08, C08G 18/81, C08G 18/67, C08G 18/10

(54) **WÄSSRIGE EFFEKTPIGMENTPASTE, VERFAHREN ZU IHRER HERSTELLUNG UND IHRE VERWENDUNG**
AQUEOUS EFFECT PIGMENT PASTE, METHOD FOR PRODUCING THE SAME AND THE USE THEREOF
PATE DE PIGMENTS A EFFET AQUEUSE, PROCEDE DE FABRICATION ET UTILISATION

(30) Priorität: 08.10.2004 DE 102004049095
(43) Veröffentlichungstag der Anmeldung: 27.06.2007
(73) Patentinhaber: BASF Coatings AG, 48165 Münster (DE)
(72) Erfinder: SCHWARTE, Stephan, 48282 Emsdetten (DE); LÖW, Norbert, 91413 Neustadt/Aisch (DE); SONNTAG, Peter, 48351 Everswinkel (DE)
(74) Vertreter: Leifert & Steffan
(86) Internationale Anmeldenummer: PCT/EP2005/055026
(87) Internationale Veröffentlichungsnummer: WO 2006/040284

(56) Entgegenhaltungen:
- EP-A- 0 608 021
- WO-A-03/097752
- DE-A1- 19 948 004

## Beschreibung

Die vorliegende Erfindung betrifft eine neue wässrige Effektpigmentpaste. Außerdem betrifft die vorliegende Erfindung ein neues Verfahren zur Herstellung einer wässrigen Effektpigmentpaste. Nicht zuletzt betrifft die vorliegende Erfindung die Verwendung der neuen wässrigen Effektpigmentpaste und der nach dem neuen Verfahren hergestellten wässrigen Effektpigmentpaste.

Bekanntermaßen enthalten Pigmentpasten oder Pigmentpräparationen Pigmente in einer höheren Konzentration, als es der späteren Anwendung entspricht (vgl. Römpp Lacke und Druckfarben, Georg Thieme Verlag, Stuttgart, New York, 1998, »Pigmentpräparationen«, Seite 452).

Wässrige Effektpigmentpasten, die der Herstellung von pigmentierten wässrigen Beschichtungsstoffen, insbesondere Wasserbasislacken, zur Herstellung von farb- und/oder effektgebenden Beschichtungen, insbesondere Basislackierungen, dienen, sind bekannt.

So geht aus der deutschen Patentanmeldung DE 100 27 291 A1 eine wässrige Effektpigmentpaste hervor, die ein Aluminiumeffektpigment, dessen Oberfläche mit Octylphenylethoxylat hydrophil eingestellt worden ist, und einen Polyurethanverdicker enthält.

Aus der deutschen Patentanmeldung DE 102 40 972 A1 ist eine wässrige Metalleffektpigmentpaste bekannt, die mindestens ein Metalleffektpigment, mindestens einen nicht assoziativ wirkenden Verdicker aus mindestens einem Methacrylatcopolymerisat auf der Basis von (C1-C6)-Alkyl(meth)acrylat und (Meth)Acrylsäure, mindestens ein organisches Amin, mindestens ein nichtionisches Tensid (Niotensid), wie Hydropalat® 3037 der Firma Cognis, und Wasser enthält.

Die bekannten wässrigen Effektpigmentpasten, sind einfach herzustellen und bewirken eine hohe Stand- und Rührstabilität, ein sehr gutes Applikationsverhalten und einen sehr guten Verlauf der hiermit hergestellten pigmentierten Beschichtungsstoffe. Die hieraus hergestellten effektgebenden Beschichtungen weisen eine isotrope Pigmentverteilung auf uns sind frei von Störungen wie Hell-Dunkel-Schattierungen (Wolken) und Stippen.

Die stetig wachsenden technischen und ästhetischen Ansprüche des Marktes, insbesondere der der Automobilhersteller und ihrer Kunden, erfordern aber eine stetige Weiterentwicklung des bisher bekannten pigmentierten Beschichtungsstoffe und der hieraus hergestellten effektgebenden Beschichtungen.

In der nicht vorveröffentlichten deutschen Patentanmeldung DE 103 50 719.1 wird eine wässrige Effektpigmentpaste beschrieben, die
(A) 10 bis 65 Gew.-% mindestens eines Effektpigments,
(B) 1 bis 20 Gew.-% mindestens einer wässrigen, nach Neutralisation strukturviskosen, monomodalen Primärdispersion eines Festkörpergehalts von 15 bis 40 Gew.-%, enthaltend als disperse Phase Partikel einer mittleren Teilchengröße von 10 bis 500 nm aus einem hydrophoben Kern und einer hydrophilen Schale, wobei die Partikel von mindestens einem (Meth)Acrylatcopolymerisat einer Glasübergangstemperatur von 30 bis 100 °C und einer Säurezahl von 10 bis 50 mg KOH/g aufgebaut sind,
(C) 0,01 bis 2 Gew.-% mindestens eines organischen Amins und/oder Ammoniak,
(D) 0,1 bis 3,0 Gew.-% mindestens eines nichtionischen Tensids (Niotensid), wie Hydropalat® 3037, und
(E) mindestens 10 Gew.-% eines organischen Lösungsmittels,
wobei die Gew.-%-Angaben jeweils auf die Gesamtmenge einer Pigmentpaste bezogen sind, enthält.

Aufgabe der vorliegenden Erfindung ist es, eine neue wässrige Effektpigmentpaste bereitzustellen, die besonders einfach herzustellen, lagerstabil und transportfähig ist. Die neue wässrige Effektpigmentpaste soll besonders lagerstabile und unter Scherbedingungen besonders stabile pigmentierte wässrige Beschichtungsstoffe liefern, die auch nach langer Scherung, insbesondere in Ringleitungen von Lackieranlagen, keine Absetzung von Effektpigmenten zeigen. Die pigmentierten wässrigen Beschichtungsstoffe, insbesondere die Wasserbasislacke, sollen ein sehr gutes Applikationsverhalten und einen sehr guten Verlauf zeigen. Die resultierenden effektgebenden Beschichtungen, insbesondere Basislackierungen, sollen aufgrund der isotropen Pigmentverteilung einen hervorragenden optischen Gesamteindruck (Appearance) aufweisen und frei von Lackstörungen, wie Hell-Dunkel-Schattierungen (Wolken) und Stippen sein.

Demgemäß wurde die neue wässrige Effektpigmentpaste gefunden, enthaltend
(A) mindestens ein effektgebendes Pigment,
(B) mindestens ein in einem wässrigen Medium dispergiertes Pfropfmischpolymerisat, herstellbar indem man mindestens ein Monomer (a) in einer wässrigen Dispersion mindestens eines Polyurethans (B1) mit mindestens einer seitenständigen und/oder mindestens einer endständigen Ethenylarylengruppe, herstellbar indem man
   (1) mindestens ein Polyurethanpräpolymer (B11), das mindestens eine freie Isocyanatgruppe enthält, mit
   (2) mindestens einem Addukt (B12) umsetzt, das erhältlich ist, indem man
      (2.1) mindestens ein Ethenylarylenmonoisocyanat (B121) und
      (2.2) mindestens eine Verbindung (B122), ausgewählt aus der Gruppe, bestehend aus Polyolen, Polyaminen und mindestens eine Hydroxylgruppe und mindestens eine Aminogruppe enthaltenden Verbindungen,
      so miteinander umsetzt, dass mindestens eine isocyanatreaktive Gruppe im Addukt (B12) verbleibt;
   radikalisch (co)polymerisiert; und
(C) mindestens eine grenzflächenaktive Verbindung, ausgewählt aus der Gruppe, bestehend aus Polyoxyalkylenderivaten von nichttrocknenden Ölen.

Im Folgenden wird die neue wässrige Effektpigmentpaste als »erfindungsgemäße Effektpigmentpaste« bezeichnet.

Außerdem wurde das neue Verfahren zur Herstellung einer wässrigen Effektpigmentpaste gefunden, bei dem man zumindest die Bestandteile (A), (B) und (C) miteinander vermischt und die resultierende Mischung homogenisiert und das im Folgenden als »erfindungsgemäßes Verfahren« bezeichnet wird.

Nicht zuletzt wurden neue Verwendungen der erfindungsgemäßen Effektpigmentpasten und der nach dem erfindungsgemäßen Verfahren hergestellten Effektpigmentpasten gefunden.

Im Hinblick auf den Stand der Technik war es überraschend und für den Fachmann nicht vorhersehbar, dass die Aufgabe, die der vorliegenden Erfindung zugrunde lag mit Hilfe der erfindungsgemäßen Effektpigmentpaste, des erfindungsgemäßen Verfahrens und der erfindungsgemäßen Verwendungen gelöst werden konnte.

Insbesondere war es überraschend, dass die erfindungsgemäßen Effektpigmentpasten besonders einfach herzustellen, lagerstabil und transportfähig waren. Die erfindungsgemäßen Effektpigmentpasten lieferten besonders lagerstabile und unter Scherbedingungen besonders stabile pigmentierte wässrige Beschichtungsstoffe, die auch nach langer Scherung, insbesondere in Ringleitungen von Lackieranlagen, keine Absetzung von Effektpigmenten zeigten. Die pigmentierten wässrigen Beschichtungsstoffe, insbesondere die Wasserbasislacke, wiesen ein sehr gutes Applikationsverhalten und einen sehr guten Verlauf auf. Die resultierenden effektgebenden Beschichtungen, insbesondere Basislackierungen, wiesen aufgrund der isotropen Pigmentverteilung einen hervorragenden optischen Gesamteindruck (Appearance) auf und waren frei von Lackstörungen, wie Hell-Dunkel-Schattierungen (Wolken) und Stippen.

Die erfindungsgemäße Effektpigmentpaste enthält mindestens ein Effektpigment (A).

Vorzugsweise werden die Effektpigmente (A) aus der Gruppe, bestehend aus organischen und anorganischen, optisch effektgebenden, farb- und optisch effektgebenden, magnetisch abschirmenden, elektrisch leitfähigen, korrosionshemmenden, fluoreszierenden und phosphoreszierenden Pigmenten, ausgewählt. Bevorzugt werden sie aus der Gruppe, bestehend aus organischen und anorganischen, optisch effektgebenden und farb- und optisch effektgebenden Pigmenten, ausgewählt. Insbesondere werden die organischen und anorganischen, optisch effektgebenden und farb- und optisch effektgebenden Pigmente (A) aus der Gruppe, bestehend aus Metalleffektpigmenten, aus Metallen und Nichtmetallen zusammengesetzten Effektpigmenten und nichtmetallischen Effektpigmenten, ausgewählt.

Insbesondere sind die Metalleffektpigmente (A) Aluminiumeffektpigmente, Eiseneffektpigmente oder Kupfereffektpigmente, wie handelsübliche Aluminiumbronzen, gemäß DE 36 36 183 A1 chromatierte Aluminiumbronzen, handelsübliche Edelstahlbronzen und handelsübliche Kupferbronzen.

Insbesondere sind die aus Metallen und Nichtmetallen zusammengesetzten Effektpigmente (A) mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen, wie sie beispielsweise in den amerikanischen Patenten US 4,434,010 A1, US 4,704,356 A1, US 4,779,898 A1, US 4,838,648 A1, US 4,930,866 A1, US 5,059,245 A1, US 5,135,812 A1, US 5,171,363 A1 oder US 5,214,530 A1 beschrieben werden.

Insbesondere sind die nichtmetallischen Effektpigmente (A) Perlglanzpigmente, insbesondere Micapigmente, wie sie beispielsweise in Merck Kontakte, 1992, Heft 2, Seiten 3 bis 60, beschrieben werden; mit Metalloxiden beschichtete, plättchenförmige Graphitpigmente, wie sie beispielsweise in der japanischen Patentanmeldung JP 5-311098 A beschrieben werden; Interferenzpigmente, die keine Reflektorschicht aus Metall enthalten und einen starken Farbflop aufweisen, wie sie beispielsweise in den amerikanischen Patenten US 4,434,010 A1, US 4,704,356 A1, US 4,779,898 A1, US 4,838,648 A1, US 4,930,866 A1, US 5,059,245 A1, US 5,135,812 A1, US 5,171,363 A1 oder US 5,214,530 A1 beschrieben werden; plättchenförmige Effektpigmente auf der Basis von Eisenoxid, die einen Farbton von Rosa bis Braunrot aufweisen, wie sie beispielsweise in den Patentanmeldungen und Patenten DE 36 36 156 A1, DE 37 18 446 A1,DE 37 19 804 A1, DE 39 30 601 A1,EP 0 068 311 A1,EP 0 264 843 A1, EP 0 265 820 A1, EP 0 283 852 A1, EP 0 293 746 A1, EP 0 417 567 A1, US 4,828,826 A oder US 5,244,649 A beschrieben werden; oder organische, flüssigkristalline Effektpigmente.

Ergänzend wird auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Beispiele für fluoreszierende und phosphoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente und pulverförmige Metallpigmente.

Beispiele für magnetisch abschirmende Pigmente sind Pigmente auf der Basis von Eisenoxiden oder Chromdioxid.

Beispiele geeigneter korrosionshemmender Pigmente sind Zinkpulver, Bleisilikate, Zinkphosphate oder Zinkborate.

Die erfindungsgemäßen Effektpigmentpasten gewährleisten daher aufgrund der Vielzahl der geeigneten Effektpigmente (A) eine universelle Einsatzbreite und gestatten die Herstellung von pigmentierten wässrigen Beschichtungsstoffen, mit denen sich eine außerordentlich große Vielfalt an effektgebenden Beschichtungen mit den unterschiedlichsten physikalischen Effekten realisieren lassen.

Demgemäß kann der Gehalt der erfindungsgemäßen Effektpigmentpasten an den Effektpigmenten (A) je nach Verwendungszweck der betreffenden pigmentierten wässrigen Beschichtungsstoffe und nach der Natur der Effektpigmente (A) sehr breit variieren. Vorzugsweise liegt der Gehalt, bezogen auf die erfindungsgemäße Effektpigmentpaste, bei 0,1 bis 80, bevorzugt 1,0 bis 70, besonders bevorzugt 2,0 bis 60, ganz besonders bevorzugt 3,0 bis 50 und insbesondere 4,0 bis 40 Gew.-%.

Darüber hinaus können die erfindungsgemäßen Effektpigmentpasten noch mindestens ein von den Effektpigmenten (A) unterschiedliches Pigment enthalten, das aus der Gruppe, bestehend aus organischen und anorganischen, farbgebenden und füllenden Pigmenten, Pigmenten, die mindestens zwei dieser Eigenschaften aufweisen, sowie Nanopartikeln ausgewählt wird, sofern ein solches zusätzliches Pigment nicht die anwendungstechnischen Eigenschaften der erfindungsgemäßen Effektpigmentpasten nachteilig beeinflusst.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, «Eisenblau-Pigmente» bis »Eisenoxidschwarz«, Seiten 451 bis 453 »Pigmente« bis »Pigmentvolumenkonzentration«, Seite 563 »ThioindigoPigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, «Metallkomplex-Pigmente», verwiesen.

Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Vorzugsweise werden die Nanopartikel aus der Gruppe, bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt. Vorzugsweise handelt es sich bei den Verbindungen der Metalle um die Oxide, Oxidhydrate, Sulfate oder Phosphate. Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet. Vorzugsweise weisen die zu Nanopartikel eine Primärpartikelgröße < 50 nm, bevorzugt 5 bis 50 nm, insbesondere 10 bis 30 nm, auf.

Die erfindungsgemäße Effektpigmentpaste enthält mindestens ein, insbesondere ein, in einem wässrigen Medium dispergiertes Pfropfmischpolymerisat (B).

Das Pfropfmischpolymerisat (B) ist herstellbar, indem man mindestens ein Monomer (a) in einer wässrigen Dispersion mindestens eines Polyurethans (B1) mit mindestens einer seitenständigen und/oder mindestens einer endständigen Ethenylarylengruppe radikalisch (co)polymerisiert.

Das Polyurethan (B1) ist herstellbar indem man
(1) mindestens ein Polyurethanpräpolymer (B11), das mindestens eine freie Isocyanatgruppe enthält, mit
(2) mindestens einem Addukt (B12) umsetzt, das erhältlich ist, indem man
   (2.1) mindestens ein Ethenylarylenmonoisocyanat (B121) und
   (2.2) mindestens eine Verbindung (B122), ausgewählt aus der Gruppe, bestehend aus Polyolen, Polyaminen und mindestens eine Hydroxylgruppe und mindestens eine Aminogruppe enthaltenden Verbindungen,
   so miteinander umsetzt, dass mindestens eine isocyanatreaktive Gruppe im Addukt (B12) verbleibt.

Die Pfropfmischpolymerisate (B) und ihre Dispersionen in einem wässrigen Medium, insbesondere ihre Primärdispersionen, sind an sich bekannt und werden im Detail in der deutschen Patentanmeldung DE 199 48 004 A1, Seite 3, Zeile 26, bis Seite 13, Zeile 66, und Seite 20, Beispiel 2, «Die Herstellung der Primärdispersion eines erfindungsgemäßen Pfropfmischpolymerisats 1», beschrieben.

Die bevorzugt eingesetzten Monomere (a) werden in der deutschen Patentanmeldung auf Seite 11, Zeile 30, bis Seite 13, Zeile 39, beschrieben.

Dabei weist das Ethenylarylenmonoisocyanat (B121) vorzugsweise die allgemeine Formel I:

CH₂=C(R)-A-X-NCO (I),

worin die Variablen die folgende Bedeutung haben:
- A =: substituierter oder unsubstituierter C₆-C₂₀-Arylenrest;
- R =: Wasserstoffatom, ein Halogenatom, eine Nitrilgruppe, eine substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylrest; und
- X =: zweibindiger organischer Rest.

Bevorzugt ist der Arylenrest A der Formel (I) 1,2-, 1,3- und/oder 1,4-Phenylen, insbesondere 1,3-Phenylen,.

Bevorzugt steht die Variable R der Formel (I) für ein Wasserstoffatom oder eine Methylgruppe, insbesondere eine Methylgruppe.

Bevorzugt bezeichnet der zweibindige organische Rest X der Formel (I) einen verzweigten oder unverzweigten C₃-C₆-Alkandiylrest.

Insbesondere ist der zweibindige organische Rest X -C(CH₃)₂-.

Besonders bevorzugt ist das Ethenylarylenmonoisocyanat (B121) der Formel (I) oder mindestens eines der Ethenylarylenmonoisocyanate (B121) der Formel (I) 1-(1-Isocyanato-1-methylethyl)-3-(1-methylethenyl)-benzol.

Bevorzugt enthält das Polyurethan (B1) hydrophile funktionelle Gruppen, insbesondere Carbonsäuregruppen und/oder Carboxylatgruppen.

Außerdem enthält das Polyurethan (B1) bevorzugt eine Ethenylarylengruppe der allgemeinen Formel II:

CH₂=C(R)-A- (II),

worin die Variable A für einen substituierten oder unsubstituierten C₆-C₂₀-Arylenrest und die Variable R für ein Wasserstoffatom, ein Halogenatom, eine Nitrilgruppe, einen substituierten oder unsubstituierten Alkyl-, Cycloalkyl-, Alkylcycloalkyl-, Cycloalkylalkyl-, Aryl-, Alkylaryl-, Cycloalkylaryl-, Arylalkyl- oder Arylcycloalkylrest stehen.

Besonders bevorzugt steht der Rest R der Formel (II) für ein Wasserstoffatom oder eine Methylgruppe, insbesondere eine Methylgruppe.

Besonders bevorzugt ist der Arylenrest A der Formel (II) 1,2-, 1,3- und/oder 1,4-Phenylen, insbesondere 1,3-Phenylen.

Vorzugsweise ist die Ethenylarylengruppe (II) über einen zweibindigen oder dreibindigen, mindestens eine Urethan- und/oder Harnstoffgruppe enthaltenden verknüpfenden Rest III mit der Polyurethanhauptkette (B1) verbunden.

Bevorzugt enthält der verknüpfenden Rest III mindestens eine der zweibindigen oder dreibindigen Gruppen der allgemeinen Formeln IIIa bis IIIc:

-X-NH-C(O)-O- (IIIa),

-X-NH-C(O)-NH- (IIIb)

oder

-X-NH-C(O)-N< (IIIc),

worin X einen der vorstehend beschriebenen zweibindigen organischen Reste bezeichnet.

Vorzugsweise ist das Polyurethanpräpolymer (B11) herstellbar, indem man mindestens eine Verbindung (B122), ausgewählt aus der Gruppe, bestehend aus Polyolen, Polyaminen und mindestens eine Hydroxylgruppe und mindestens eine Aminogruppe enthaltenden Verbindungen, mit mindestens einem Polyisocyanat (B123) umsetzt.

Bevorzugt sind die Verbindungen (B122) Oligomere oder Polymere.

Insbesondere sind die Oligomeren und Polymeren (B122) Polyester und/oder Polyurethane.

Der Gehalt der erfindungsgemäßen Effektpigmentpaste an den Pfropfmischpolymerisaten (B) kann ebenfalls sehr breit variieren und richtet sich insbesondere nach den jeweils eingesetzten Effektpigmenten (A). Vorzugsweise liegt der Gehalt, bezogen auf die erfindungsgemäße Effektpigmentpaste, bei 1 bis 50, bevorzugt 1,5 bis 45, besonders bevorzugt 2 bis 40, ganz besonders bevorzugt 2,5 bis 35 und insbesondere 3 bis 30 Gew.-%.

Demgemäß kann auch das Pigment-Bindemittel-Verhältnis (A) : (B) sehr breit variieren. Die bevorzugten Verhältnisse ergeben sich aus den bevorzugt eingesetzten Mengen an (A) und (B).

Die erfindungsgemäßen Effektpigmentpasten enthalten des Weiteren mindestens eine, besondere eine, grenzflächenaktive Verbindung, ausgewählt aus der Gruppe, bestehend aus Polyoxyalkylenderivaten von nichttrocknenden Ölen.

Vorzugsweise enthalten die grenzflächenaktiven Verbindungen (C) jeweils eine Polyoxyalkylengruppe.

Bevorzugt enthalten die Polyoxyethylengruppen der grenzflächenaktiven Verbindungen (C) jeweils 10 bis 60 Oxyalkylengruppen.

Besonders bevorzugt enthalten die Polyoxyethylengruppen der grenzflächenaktiven Verbindungen (C) Oxyethylengruppen oder bestehen hieraus.

Vorzugsweise sind die grenzflächenaktiven Verbindungen (C) Derivate von nichttrocknenden pflanzlichen Ölen.

Insbesondere sind die grenzflächenaktiven Verbindungen (C) Derivate von Ricinusöl.

Die grenzflächenaktiven Verbindungen (C) sind handelsübliche Verbindungen und werden beispielsweise unter der Marke Hydropalat® 3037 von der Firma Cognis vertrieben.

Der Gehalt der erfindungsgemäßen Effektpigmentpasten an den grenzflächenaktiven Verbindungen kann ebenfalls sehr breit variieren und richtet sich insbesondere nach der Dispergierbarkeit der Effektpigmente (A). Vorzugsweise liegt der Gehalt bei, bezogen auf die Effektpigmentpaste, 0,1 bis 15, bevorzugt 0,2 bis 10, besonders bevorzugt 0,3 bis 8, ganz besonders bevorzugt 0,4 bis 6 und insbesondere 0,5 bis 4 Gew.-%.

Der Wassergehalt der erfindungsgemäßen Effektpigmentpasten kann ebenfalls sehr breit variieren. Vorzugsweise liegt er, bezogen auf die erfindungsgemäße Pigmentpaste, bei 10 bis 90, bevorzugt 15 bis 80 und insbesondere 20 bis 75 Gew.-%.

Darüber hinaus können die erfindungsgemäßen Effektpigmentpasten weitere übliche und bekannte Zusatzstoffe, wie sie beispielsweise aus der deutschen Patentanmeldung DE 199 48 004 A1, Seite 16, Zeile 24, bis Seite 17, Zeile 5, bekannt sind, und/oder organische Lösemittel, insbesondere mit Wasser mischbare organische Lösemittel, enthalten. Dabei sind solche Zusatzstoffe und Lösemittel ausgeschlossen, die mit den wesentlichen Bestandteilen der erfindungsgemäßen Effektpigmentpasten nachteilige Wechselwirkungen eingehen, die beispielsweise Zersetzungsreaktionen, Phasentrennungen oder Ausflockungen bewirken. Der Fachmann kann daher die richtige Auswahl anhand seines allgemeinen Fachwissens gegebenenfalls unter Zuhilfenahme einiger orientierender Versuche treffen.

Die Herstellung der erfindungsgemäßen Effektpigmentpasten weist keine methodischen Besonderheiten, sondern erfolgt, indem man man mindestens die vorstehend beschriebenen wesentlichen Bestandteile (A), (B) und (C) mit einander vermischt und die resultierende Mischung homogenisiert. Dazu können die in der Lacktechnologie üblichen und bekannten Mischaggregate wie Rührkessel, Dissolver, Kneter oder Rührwerksmühlen verwendet werden.

Die erfindungsgemäßen Effektpigmentpasten erweisen sich als besonders einfach herstellbar. Sie sind auch bei wechselnden Temperaturen sehr lange lagerstabil und für sehr gut transportfähig. Insbesondere kommt es auch nach längerer Lagerzeit zu keiner Gasentwicklung bei erfindungsgemäßen Effektpigmentpasten, die Metalleffektpigmente, insbesondere Aluminiumeffektpigmente, enthalten. Sie kommen daher sehr gut für die unterschiedlichsten Verwendungszwecke in Betracht. Vorzugsweise werden sie für die Herstellung von Dichtungsmassen, Klebstoffen und Beschichtungsstoffen für die Abdichtung, die Verklebung und die Beschichtung von Substraten verwendet. Bevorzugt werden sie für die Herstellung von pigmentierten, wässrigen Beschichtungsstoffen, insbesondere Wasserbasislacken, verwendet.

Außer den erfindungsgemäßen Effektpigmentpasten können für die Herstellung der Wasserbasislacke die üblicherweise verwendeten Bestandteile eingesetzt werden, wie sie beispielsweise in der deutschen Patentanmeldung DE 199 48 004 A1, Seite 3, Zeile 14, bis Seite 17, Zeile 8, beschrieben werden.

Bevorzugt dienen die Wasserbasislacke der Herstellung farb- und/oder effektgebender Mehrschichtlackierungen auf grundierten oder ungrundierten Substraten, insbesondere durch ein Nass-in-nass-Verfahren, umfassend zumindest die folgenden Verfahrensschritte:
(VI) Herstellen einer Basislackschicht durch Applikation eines Wasserbasislacks auf das Substrat,
(VII) Trocknen der Basislackschicht,
(VIII) Herstellen einer Klarlackschicht durch Applikation eines Klarlacks auf die Basislackschicht und
(VIV) gemeinsame Härtung von zumindest der Basislackschicht und der Klarlackschicht;
wie es beispielsweise im Detail in der deutschen Patentanmeldung DE 199 48 004 A1, Seite 17, Zeile 37, bis Seite 19, Zeile 22, beschrieben wird.

Dabei können die Substrate Formteile, Folien und Fasern, insbesondere aus Kunststoff, Kraftfahrzeugkarosserien, industrielle Bauteile, inklusive mechanische, optische und elektrotechnische Bauteile, Coils und Emballagen, oder Möbel sein, wie sie beispielsweise in der deutschen Patentanmeldung DE 199 48 004 A1, Seite 17, Zeilen 14 bis 36, beschrieben werden.

Die resultierenden effektgebenden Mehrschichtlackierungen weisen ein hervorragendes Eigenschaftsprofil auf, das hinsichtlich der Mechanik, Optik, Korrosionsbeständigkeit und Zwischenschichthaftung und Substrathaftung hervorragend ausgewogen ist. Hervorzuheben ist dabei die hervorragende Appearance, die auf die von Lackstörungen freie Basislackierung zurückzuführen ist.

### Beispiele und Vergleichsversuche

### Herstellbeispiel 1

### Die Herstellung eines Mischlacks 1

40,3 Gewichtsteile der Primärdispersion eines Pfropfmischpolymerisats (B) gemäß der deutschen Patentanmeldung DE 199 48 004 A1, Beispiel 2, «Die Herstellung der Primärdispersion eines erfindungsgemäßen Pfropfmischpolymerisats 1», Seite 20, Zeilen 10 bis 21, 36,2 Gewichtsteile deionisiertes Wasser, 6,0 Gewichtsteile Surfynol® 100 (handelsübliche grenzflächenaktive Verbindung der Firma Air Products, 50-prozentige Anlösung in Butylglykol), 2,5 Gewichtsteile eines Polyoxyalkylenderivats von Rizinusöl (Hydropalat® 3037 der Firma Cognis) und 15 Gewichtsteile 1-Propoxy-2-propanol wurden miteinander vermischt, wonach man die resultierende Mischung homogenisierte.

### Beispiel 1 und Vergleichsversuche V 1 und V 2

### Die Herstellung der Effektpigmentpasten 1 (Beispiel 1) und V 1 und V 2 (Vergleichsversuche V 1 und V 2)

Die Effektpigmentpasten 1 des Beispiels 1 und V 1 und V 2 der Vergleichsversuche V 1 und V 2 wurden durch Vermischen der in der Tabelle angegebenen Bestandteile in der angegebenen Reihenfolge und Homogenisieren der resultierende Mischungen hergestellt. Die Ergebnisse betreffend die Lagerstabilität der resultierenden Effektpigmentpasten finden sich ebenfalls in der Tabelle. Sie untermauern, dass die Effektpigmentpaste 1 den Effektpigmentpasten V 1 und V 2 eindeutig überlegen ist.

**Tabelle: Stoffliche Zusammensetzung und Lagerstabilität der Effektpigmentpasten 1 (Beispiel 1) und V 1 und V 2 (Vergleichsversuche V 1 und V 2)**

| | Vergleichsversuche: Beispiel | | |
|---|---|---|---|
| | V1 | V2 | 1 |
| Bestandteil (Gewichtsteile): | | | |
| | | | |
| Butylglykol | 10 | 12 | 12 |
| | | | |
| Alu-Stapa Hydrolux® 8154 | 10 | 10 | 10 |
| | | | |
| Mischlack 1 gemäß Herstellbeispiel 1 | - | - | 20 |
| | | | |
| Mischlack gemäß der deutschen Patentanmeldung DE 102 40 972 A1, Seite 7, Absatz [0053] | 30 | 20 | - |
| | | | |
| Lagerstabilität: | | | |
| | | | |
| Signifikantes Absetzen von Pigmenten? | nein | ja | nein |
| | | | |
| Gasung nach vier Wochen bei 25°C? | nein | nein | nein |
| | | | |
| Gasung nach vier Wochen bei 40°C? | ja | ja | nein |
| | | | |
| Einsatz ohne Verlust von wesentlichen Eigenschaften (Glanz, Deckvermögen, Pigmenteorientierung) der Basislackierung nach Lagerung bei 40°C möglich? | nein | nein | ja |

### Beispiele 2 und 3

Die Herstellung der wässrigen Effektpigmentpaste 2 und des Wasserbasislacks 1

Zur Herstellung der wässrigen Effektpigmentpaste 2 des Beispiels 2 wurden 2,8 Gewichtsteile des Effektpigments Mearlin® EXT CFS Fine Pearl 1303V mit 8,4 Gewichtsteilen des Mischlacks des Herstellbeispiels 1 vermischt, wonach man die resultierende Mischung homogenisierte.

Zur Herstellung des Wasserbasislacks 1 des Beispiels 3 wurden 20 Gewichtsteile Verdickungsmittel (Paste eines Natrium-Magnesium-Schichtsilikats, Laponite® RD, 3-prozentig in Wasser) vorgelegt. Dazu wurden 25,4 Gewichtsteile der Polyurethandispersion gemäß der deutschen Patentanmeldung DE 40 09 858 A1, Spalte 16, »C. Herstellung einer wässrigen Polyurethanharzdispersion«, Zeilen 10 bis 35, unter Rühren hinzugegeben. Anschließend wurde eine Mischung aus 4,6 Gewichtsteilen eines handelsüblichen wasserverdünnbaren Melaminformaldehydharzes (Cymel® 3020) und einer wässrigen Polyesterharzdispersion gemäß der deutschen Patentanmeldung DE 40 09 858 A1, Spalte 16, »D. Herstellung einer wässrigen Polyesterharzdispersion«, Zeilen 37 bis 59, 6,1 Gewichtsteile Butylglykol und 0,4 Gewichtsteile Dimethylethanolamin (10-prozentig in deionisiertem Wasser) unter Rühren hinzugegeben. Die resultierende Mischung wurde mit 4,4 Gewichtsteilen des polyurethanmodifizierten Polyacrylatharzes gemäß der deutschen Patentanmeldung DE 44 37 535 A1, Seite 7, «D. Herstellung des erfindungsgemäßen polyurethanmodifizierten Polyacrylates», Zeile 55, bis Seite 8, Zeile 23, versetzt. Zur resultierenden Mischung wurden unter Rühren 1,0 Gewichtsteile N-Methylpyrrolidon, 1,55 Gewichtsteile 2-Ethylhexanol, 1,55 Gewichtsteile Surfynol® 100 (50-prozentig in Butylglykol), 1,0 Gewichtsteile Polypropylenglykol (zahlenmittleres Molekulargewicht: 900), 0,7 Gewichtsteile mit einem Amin blockierte p-Toluolsulfonsäure, 0,68 Gewichtsteile eines modifizierten Polydimethylsiloxans, 0,25 Gewichtsteile einer 50-prozentigen Lösung eines handelsüblichen Polyurethanverdickers (Nopco® DSX1550) in Butylglykol, 3,1 Gewichtsteile der zehnprozentigen Russpaste gemäß dem deutschen Patent DE 100 43 405 C1, Spalte 11, Absatz [0075], 0,5 Gewichtsteile der Siliziumdioxidpaste gemäß der deutschen Patentanmeldung DE 101 29 899 A1, Seite 12, Zeilen 10 bis 17, und 2,0 Gewichtsteile Wasser hinzugegeben. Die resultierende Mischung wurde mit einer Aluminiumeffektpigmentpaste aus 0,18 Gewichtsteilen Alu-Stapa Hydrolux® 8154, 0,4 Gewichtsteilen der wässrigen Polyesterharzdispersion gemäß der deutschen Patentanmeldung 40 09 858 A1 Spalte 16, «D. Herstellung einer wässrigen Polyesterharzdispersion», Zeilen 37 bis 59, und 0,3 Gewichtsteile Butylglykol versetzt.

Die resultierende Mischung wurde mit dem oben beschriebenen Mischlacks 2 des Beispiels 2 versetzt, und der resultierende Wasserbasislack 1 wurde homogenisiert.

Der Wasserbasislack 1 wurde mit einer zehnprozentigen wässrigen Dimethylethanolamin-Lösung und deionisiertem Wasser auf einen pH-Wert von 7,8 bis 8,2 und eine Applikationsviskosität von 80 mPas bei 1.000 s⁻¹ eingestellt.

Zur Simulation der Ringleitungsstabilität wurden 750 ml des Wasserbasislacks 1 in eine handelsübliche 1l-Lackdose eingefüllt und während 20 Tage bei Raumtemperatur mit einem Wendelrührer gerührt. Die Umfangsgeschwindigkeit betrug etwa 0,1 m/s. Auch nach 20 Tagen zeigten sich keine Ablagerungen von Partikeln am Boden der Dose. Der Wasserbasislack 1 konnte daher zur Herstellung von stippenfreien effektgebenden Mehrschichtlackierungen verwendet werden.

### Vergleichsversuch V 3

### Die Herstellung des Wasserbasislacks V 3

Zur Herstellung des Wasserbasislacks V 3 des Vergleichsversuchs V 3 wurden 20 Gewichtsteile Verdickungsmittel (Paste eines Natrium-Magnesium-Schichtsilikats, Laponite® RD, 3-prozentig in Wasser) vorgelegt. Dazu wurden 22,1 Gewichtsteile der Polyurethandispersion gemäß der deutschen Patentanmeldung DE 40 09 858 A1, Spalte 16, «C. Herstellung einer wässrigen Polyurethanharzdispersion«, Zeilen 10 bis 35, und 3,3 Gewichtsteile der Primärdispersion des Pfropfmischpolymerisats (B) gemäß der deutschen Patentanmeldung DE 199 48 004 A1, Beispiel 2, »Die Herstellung der Primärdispersion eines erfindungsgemäßen Pfropfmischpolymerisats 1 «, Seite 20, Zeilen 10 bis 21, unter Rühren hinzugegeben. Anschließend wurde eine Mischung aus 4,6 Gewichtsteilen eines handelsüblichen wasserverdünnbaren Melaminformaldehydharzes (Cymel® 3020) und einer wässrigen Polyesterharzdispersion gemäß der deutschen Patentanmeldung DE 40 09 858 A1, Spalte 16, »D. Herstellung einer wässrigen Polyesterharzdispersion«, Zeilen 37 bis 59, 6,1 Gewichtsteile Butylglykol und 0,4 Gewichtsteile Dimethylethanolamin (10-prozentig in deionisiertem Wasser) unter Rühren hinzugegeben. Die resultierende Mischung wurde mit 4,4 Gewichtsteilen des polyurethanmodifizierten Polyacrylatharzes gemäß der deutschen Patentanmeldung DE 44 37 535 A1, Seite 7, »D. Herstellung des erfindungsgemäßen polyurethanmodifizierten Polyacrylates», Zeile 55, bis Seite 8, Zeile 23, versetzt. Zur resultierenden Mischung wurden unter Rühren 1,0 Gewichtsteile N-Methylpyrrolidon, 1,55 Gewichtsteile 2-Ethylhexanol, 1,55 Gewichtsteile Surfynol® 100 (50-prozentig in Butylglykol), 1,0 Gewichtsteile Polypropylenglykol (zahlenmittleres Molekulargewicht: 900), 0,7 Gewichtsteile mit einem Amin blockierte p-Toluolsulfonsäure, 0,68 Gewichtsteile eines modifizierten Polydimethylsiloxans, 0,25 Gewichtsteile einer 50-prozentigen Lösung eines handelsüblichen Polyurethanverdickers (Nopco® DSX1550) in Butylglykol, 3,1 Gewichtsteile der zehnprozentigen Russpaste gemäß dem deutschen Patent DE 100 43 405 C1, Spalte 11, Absatz [0075], 0,5 Gewichtsteile der Siliziumdioxidpaste gemäß der deutschen Patentanmeldung DE 101 29 899 A1,Seite 12, Zeilen 10 bis 17, und 2,0 Gewichtsteile Wasser hinzugegeben. Die resultierende Mischung wurde mit einer Aluminiumeffektpigmentpaste aus 0,18 Gewichtsteilen Alu-Stapa Hydrolux® 8154, 0,4 Gewichtsteilen der wässrigen Polyesterharzdispersion gemäß der deutschen Patentanmeldung 40 09 858 A1 Spalte 16, «D. Herstellung einer wässrigen Polyesterharzdispersion», Zeilen 37 bis 59, und 0,3 Gewichtsteile Butylglykol versetzt.

Die resultierende Mischung wurde mit einer Effektpigmentpaste aus 2,8 Gewichtsteilen des Effektpigments Mearlin® EXT CFS Fine Pearl 1303V und 8,4 Gewichtsteilen des Mischlacks gemäß der deutschen Patentanmeldung DE 102 40 972 A1, Seite 7, Absatz [0053] versetzt, und der resultierende Wasserbasislacks wurde homogenisiert.

Der Wasserbasislack V 3 wurde mit einer zehnprozentigen wässrigen Dimethylethanolamin-Lösung und deionisiertem Wasser auf einen pH-Wert von 7,8 bis 8,2 und eine Applikationsviskosität von 80 mPas bei 1.000 s⁻¹ eingestellt.

Zur Simulation der Ringleitungsstabilität wurden 750 ml des Wasserbasislacks V 3 in eine handelsübliche 1l-Lackdose eingefüllt und während 20 Tage bei Raumtemperatur mit einem Wendelrührer gerührt. Die Umfangsgeschwindigkeit betrug etwa 0,1 m/s. Nach 20 Tagen zeigten sich Ablagerungen von Partikeln am Boden der Dose. Der Wasserbasislack V 3 konnte daher nicht zur Herstellung von stippenfreien effektgebenden Mehrschichtlackierungen verwendet werden. Die betreffenden effektgebenden Mehrschichtlackierungen machten aufgrund der sichtbaren Stippen in den effektgebenden Mehrschichtlackierungen eine Nachbearbeitung bis hin zur teilweisen Neulackierung der entsprechenden lackierten Automobilkarosserien, und schlimmstenfalls kam es sogar zu einem Ausfall der entsprechenden lackierten Automobilkarosserien.

### Beispiel 4 und Vergleichsversuch V 4

### Die Herstellung von effektgebenden Mehrschichtlackierungen 1 (Beispiel 4) und V 3 (Vergleichsversuch V 4)

Für die Herstellung der effektgebenden Mehrschichtlackierung 1 des Beispiels 4 wurde der Wasserbasislack 1 des Beispiels 3 verwendet.

Für die Herstellung der effektgebenden Mehrschichtlackierung V 3 des Vergleichsversuchs V 4 wurde der Wasserbasislack V 3 des Vergleichsversuchs V 3 verwendet.

Auf Stahltafeln (Karosseriebleche) der Abmessung 30 mal 70 cm, die mit einer üblichen und bekannten, kathodisch abgeschiedenen und eingebrannten Elektrotauchlackierung beschichtet worden waren, wurde ein handelsüblicher Füller der Firma BASF Coatings AG appliziert, wonach die resultierenden Füllerschichten während 5 Minuten bei 20°C und einer relativen Luftfeuchtigkeit von 65% abgelüftet und in einem Umluftofen während 30 Minuten bei 140°C eingebrannt wurden. Nach dem Abkühlen der Stahltafeln auf 20°C wurden die Wasserbasislacke 1 und V 3 jeweils in zwei Spritzgängen appliziert. Der erste Auftrag erfolgte mittels ESTA (Glockendrehzahl: 45.000 min-1; Lenkluft ESTA: 120 Nl/min; Spannung: 65 kV; Abstand: 0,25 m; Ausflussmenge Lack: 170 ml/ min), entsprechend einer Trockenschichtdicke von 8 bis 10 µm. Der zweite Auftrag erfolgte pneumatisch (Abstand: 0,32 m; Ausflussmenge Lack: 540 ml/min; Zerstäuberluftmenge: 300 Nl/min; Zerstäuberluftdruck: 4,8 bar; Hornluftmenge: 395 Nl/min; Hornluftdruck: 5,2 bar), entsprechend einer Trockenschichtdicke von 4 bis 6 µm. Die Wasserbasislackschichten wurden nach dem ersten und zweiten Auftrag jeweils während zwei Minuten abgelüftet. Anschließend wurden sie während 10 Minuten bei 80°C vorgetrocknet, abgekühlt und mit einem handelsüblichen Zweikomponenten-Klarlack der Firma BASF Coatings AG, entsprechend einer Trockenschichtdicke von 40 µm, überschichtet. Hiernach wurden die Wasserbasislackschichten und Klarlackschichten während 30 Minuten bei 130°C gemeinsam eingebrannt, wodurch die Mehrschichtlackierung 1 des Beispiels 4 und die Mehrschichtlackierung V 3 des Vergleichsversuchs V 4 resultierten.

Die Mehrschichtlackierungen 1 und V 3 wurden unter diffusem Licht aus einem Abstand von 2 bis 3 m in Aufsicht (80°) und Schrägsicht (40°) hinsichtlich der Hell-Dunkel-Schattierungen (Wolken) visuell beurteilt und benotet (Note 1: keine Wolken sichtbar; bis Note 5: Wolken sehr deutlich sichtbar).

Bei der Mehrschichtlackierung 1 resultierte in Aufsicht und Schrägsicht die Note 2, wogegen bei der Mehrschichtlackierung V 3 die Note 3 resultierte. Dies untermauerte, dass durch die wässrige Effektpigmentpaste 1 des Beispiels 1 eine signifikante Verbesserungen der Pigmenteorientierung und damit eine signifikante Verminderung von Hell-Dunkel-Schattierungen erzielt werden konnten.

## Patentansprüche

1. Wässrige Effektpigmentpaste, enthaltend
(A) mindestens ein effektgebendes Pigment,
(B)mindestens ein in einem wässrigen Medium dispergiertes Pfropfmischpolymerisat, herstellbar Indem man mindestens ein Monomer (a) in einer wässrigen Dispersion mindestens eines Polyurethans (B1) mit mindestens einer seitenständigen und/oder mindestens einer endständigen Ethenylarylengruppe, herstellbar indem man
(1) mindestens ein Polyurethanpräpolymer (B11), das mindestens eine freie Isocyanatgruppe enthält, mit
(2) mindestens einem Addukt (B12) umsetzt, das erhältlich ist, indem man
(2.1) mindestens ein Ethonylarylenmonolsocyanat (B121) und
(2.2) mindestens eine Verbindung (B122), ausgewählt aus der Gruppe, bestehend aus Polyolen, Polyaminen und mindestens eine Hydroxylgruppe und mindestens eine Aminogruppe enthaltenden Verbindungen,
so miteinander umsetzt, dass mindestens eine Isocyanatreaktive Gruppe im Addukt (B12) verbleibt;
radikalisch (co)polymerisiert; und
(C) mindestens eine grenzflächenaktive Verbindung, ausgewählt aus der Gruppe, bestehend aus Polyoxyalkylenderivaten von nichttrocknenden Ölen.

2. Effektpigmentpaste nach Anspruch 1, **dadurch gekennzeichnet, dass** die Effektpigmente (A) aus der Gruppe, bestehend aus organischen und anorganischen, optisch effektgebenden, farb- und optisch effektgebenden, magnetisch abschirmenden, elektrisch leitfähigen, korrosionshemmenden, fluoreszierenden und phosphoreszierenden Pigmenten, ausgewählt sind.

3. Effektpigmentpaste nach Anspruch 2, **dadurch gekennzeichnet, dass** die Effektpigmente (A) aus der Gruppe, bestehend aus organischen und anorganischen, optisch effektgebenden und färb- und optisch effektgebenden Pigmenten, ausgewählt sind.

4. Effektpigmentpaste nach Anspruch 3, **dadurch gekennzeichnet, dass** dieorganischen und anorganischen, optisch effektgebenden und farb- und optisch effektgebenden Pigmente (A) aus der Gruppe, bestehend aus Metalleffektpigmenten, aus Metallen und Nichtmetallen zusammengesetzten Effektpigmenten und nichtmetallischen Effektpigmenten, ausgewählt sind.

5. Effektpigmentpaste nach einem der Ansprüche 1 bis 4, **dadurch gekennzeichnet, dass** das Ethenylarylenmonoisocyanat (B121) die allgemeine Formel I aufweist:
CH₂=C(R)A-X-NCO (I),
worin die Variablen die folgende Bedeutung haben:
A = substituierter oder unsubstituierter C₆₋C₂₀-Arylenrest;
R = Wasserstoffatom, ein Halogenatom, eine Nitrilgruppe, eine substituierte oder unsubstituierteAlkyl-, Cycloalkyl-, Alkylcycloalkyl-, Cycloalkyalkyl-, Aryl-, Alkylaryl-, Cycloalkylaryl-, Arylalkyl- oder Arylcycloalkylrest; und
X = zweibindiger organischer Rest.

6. Effektpigmentpaste nach Anspruch 5, **dadurch gekennzeichnet, dass** der Arylenrest A der Formel (I) 1,2-, 1,3- und/oder 1,4-Phenylen, insbesondere 1,3- Phenylen, ist.

7. Effektpigmentpaste nach Anspruch 5 oder 6, **dadurch gekennzeichnet, dass** die Variable R der Formel (I) für ein Wasserstoffatom oder eine Methylgruppe, insbesondere eine Methylgruppe, steht.

8. Effektpigmentpaste nach einem der Ansprüche 5 bis 7, **dadurch gekennzeichnet, dass** der zweibindige organische Rest X der Formel (I) einen verzweigten oder unverzweigten C₃-C₆-Alkandiylrest bezeichnet.

9. Effektpigmentpaste nach Anspruch 8, **dadurch gekennzeichnet, dass** der zweibindige organische Rest X -C(CH₃)₂- ist.

10. Effektpigmentpaste nach einem der Ansprüche 5 bis 9, **dadurch gekennzeichnet, dass** das Ethenylarylenmonoisocyanat (B121) der Formel (I) oder mindestens eines der Ethenylarylenmonoisocyanate (B121) der Formel (I) 1-(1-isocyanato-1-methylethyl)-3-(1-methylethenyl)-benzol ist.

11. Effektpigmentpaste nach einem der Ansprüche 1 bis 10, **dadurch gekennzeichnet, dass** das Polyurethan (B1) hydrophile funktionelle Gruppen, insbesondere Carbonsäuregruppen und/oder Carboxylatgruppen, enthält.

12. Effektpignnentpaste nach einem der Ansprüche 1 bis 11, **dadurch gekennzeichnet, dass** das Polyurethan (B1) eine Ethenylarylengruppe der allgemeinen Formel II enthält:
CH₂=C(R)-A- (II),
worin die Variable A für einen substituierten oder unsubstitulerten C₆-C₂₀-Arylenrest und die Variable R für ein Wasserstoffatom, ein Halogenatom, eine Nitrilgruppe, einen substituierten oder unsubstituierten Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest stehen.

13. Effektpigmentpaste nach Anspruch 12, **dadurch gekennzeichnet, dass** der Rest R der Formel (II) für ein Wasserstoffatom oder eine Methylgruppe, Insbesondere eine Methylgruppe, steht.

14. Effektpigmentpaste nach Anspruch 12 oder 13, **dadurch gekennzeichnet, dass** der Arylenrest A der Formel (II) 1,2-, 1,3- und/oder 1,4-Phenylen, insbesondere 1,3-Phenylen, ist.

15. Effektpigmentpaste nach einem der Ansprüche 12 bis 14, **dadurch gekennzeichnet, dass** die Ethenylarylengruppe (II) über einen zweibindigen oder dreibindigen, mindestens eine Urethan- und/oder Hamstoffgruppe enthaltenden verknüpfenden Rest III mit der Polyurethanhauptkette verbunden ist.

16. Effektpigmentpaste nach Anspruch 15, **dadurch gekennzeichnet, dass** derverknüpfenden Rest III mindestens eine der zweibindigen oder dreibindigen Gruppen der allgemeinen Formeln IIIa bis IIIc enthält
-X-NH-C(O)-O- (IIIa),
-X-NH-C(O)-NH- (IIIb)
oder
-X-NH-C(O)-N< (IIIc),
worin X einen zweibindigen organischen Rest bezeichnet,

17. Effektpigmentpaste nach einem der Ansprüche 1 bis 16, **dadurch gekennzeichnet, dass** das Polyurethanpräpolymer (B11) herstellbar ist, indem man mindestens eine Verbindung (B122), ausgewählt aus der Gruppe, bestehend aus Polyolen, Polyaminen und mindestens eine Hydroxylgruppe und mindestens eine Aminogruppe enthaltenden Verbindungen, mit mindestens einem Polyisocyanat (B123) umsetzt.

18. Effektpigmentpaste nach einem der Ansprüche 1 bis 17, **dadurch gekennzeichnet, dass** die Verbindungen (B122) Oligomere oder Polymere sind.

19. Effektpigmentpaste nach Anspruch 18, **dadurch gekennzeichnet, dass** die Oligomeren und Polymeren (B122) Polyester und/oder Polyurethane sind.

20. Effektpigmentpaste nach einem der Ansprüche 1 bis 19, **dadurch gekennzeichnet, dass** die grenzflächenaktiven Verbindungen (C) jeweils eine Polyoxyalkylengruppe enthalten.

21. Effektpigmentpaste nach einem der Ansprüche 1 bis 20, **dadurch gekennzeichnet, dass** die grenztlächenaktiven Verbindungen (C) Derivate von nichttrocknenden pflanzlichen Ölen sind.

22. Effektpigmentpaste nach Anspruch 21, **dadurch gekennzeichnet, dass** die grenzflächenaktiven Verbindungen (C) Derivate von Ricinusöl sind.

23. Verfahren zur Herstellung der wässrigen Effektpigmentpaste gemäß einem der Ansprüche 1 bis 22, **dadurch gekennzeichnet, dass** man mindestens die Bestandtelle (A), (B) und (C) mit einander vermischt und die resultierende Mischung homogenisiert.

24. Verwendung der wässrigen Effektpigmentpaste gemäß einem der Ansprüche 1 bis 22 und der nach dem Verfahren gemäß Anspruch 23 hergestellten Effektpigmentpaste für die Herstellung von Dichtungsmassen, Klebstoffen und Beschichtungsstoffen für die Abdichtung, die Verklebung und die Beschichtung von Substraten.

25. Verwendung nach Anspruch 24, **dadurch gekennzeichnet, dass** die Beschichtungsstoffe Wasserbasislacke sind.

26. Verwendung nach Anspruch 25, **dadurch gekennzeichnet, dass** die Wasserbasislacke der Herstellung farb- und/oder effektgebender Mehrschichtlackierungen auf grundierten oder ungrundierten Substraten dienen.

27. Verwendung nach Anspruch 26, **dadurch gekennzeichnet, dass** die farb- und/oder effektgebenden Mehrschichtlackierungen durch ein Nass-in-nass-Verfahren, umfassend zumindest die folgenden Verfahrensschritte:
(VI) Herstellen einer Basislackschicht durch Applikation eines Wasserbasislacks auf das Substrat,
(VII) Trocknen der Basislackschicht,
(VIII) Herstellen einer Klarlackschicht durch Applikation eines Klarlacks auf die Basislackschicht und
(VIV) gemeinsame Härtung von zumindest der Basislackschicht und der Klarlackschicht;
hergestellt werden.

28. Verwendung nach einem der Ansprüche 24 bis 27, **dadurch gekennzeichnet, dass** die Substrate Formteile, Folien und Fasern, insbesondere aus Kunststoff, Kraftfahrzeugkarosserien, Industrielle Bauteile, inklusive mechanische, optische und elektrotechnische Bauteile, Coils und Emballagen, oder Möbel sind.

## Claims

1. Aqueous effect pigment paste comprising
(A) at least one effect pigment,
(B) at least one graft copolymer in dispersion in an aqueous medium and preparable by subjecting at least one monomer (a) in an aqueous dispersion of at least one polyurethane (B1) containing at least one lateral and/or at least one terminal ethenylarylene group and preparable by reacting
(1) at least one polyurethane prepolymer (B11) containing at least one free isocyanate group with
(2) at least one adduct (B12), obtainable by reacting
(2.1) at least one ethenylarylene monoisocyanate (B121) and
(2.2) at least one compound (B122), selected from the group consisting of polyols, polyamines and compounds containing at least one hydroxyl group and at least one amino group, with one another so as to leave at least one isocyanate-reactive group in the adduct (B12);
to free-radical (co)polymerization; and
(C) at least one surface-active compound selected from the group consisting of polyoxyalkylene derivatives of nondrying oils.

2. Effect pigment paste according to Claim 1, **characterized in that** the effect pigments (A) are selected from the group consisting of organic and inorganic, optical effect, color and optical effect, magnetically shielding, electrically conductive, anticorrosion, fluorescent, and phosphorescent pigments.

3. Effect pigment paste according to Claim 2, **characterized in that** the effect pigments (A) are selected from the group consisting of organic and inorganic, optical effect, and color and optical effect pigments.

4. Effect pigment paste according to Claim 3, **characterized in that** the organic and inorganic, optical effect, and color and optical effect pigments (A) are selected from the group consisting of metal effect pigments, effect pigments composed of metals and nonmetals, and nonmetallic effect pigments.

5. Effect pigment paste according to any one of Claims 1 to 4, **characterized in that** the ethenylarylene monoisocyanate (B121) has the general formula I:
CH₂=C(R)-A-X-NCO (I)
in which the variables have the following definition:
A = substituted or unsubstituted C₆-C₂₀ arylene radical;
R = hydrogen atom, a halogen atom, a nitrile group, or a substituted or unsubstituted alkyl, cycloalkyl, alkylcycloalkyl, cyclo- alkylalkyl, aryl, alkylaryl, cycloalkylaryl, arylalkyl or arylcycloalkyl radical; and
X = divalent organic radical.

6. Effect pigment paste according to Claim 5, **characterized in that** the arylene radical A of formula (I) is 1,2-, 1,3- and/or 1,4-phenylene, especially 1,3-phenylene.

7. Effect pigment paste according to Claim 5 or 6, **characterized in that** the variable R of the formula (I) is a hydrogen atom or a methyl group, especially a methyl group.

8. Effect pigment paste according to any of Claims 5 to 7, **characterized in that** the divalent organic radical X of the formula (I) designates a branched or unbranched C₃-C₆ alkanediyl radical.

9. Effect pigment paste according to Claim 8, **characterized in that** the divalent organic radical X is -C(CH₃)₂-.

10. Effect pigment paste according to any one of Claims 5 to 9, **characterized in that** the ethenylarylene monoisocyanate (B121) of the formula (I) or at least one of the ethenylarylene monoisocyanates (B121) of the formula (I) is 1-(1-isocyanato-1-methylethyl)-3-(1-methylethenyl)benzene.

11. Effect pigment paste according to any one of Claims 1 to 10, **characterized in that** the polyurethane (B1) contains hydrophilic functional groups, especially carboxylic acid groups and/or carboxylate groups.

12. Effect pigment paste according to any one of Claims 1 to 11, **characterized in that** the polyurethane (B1) contains an ethenylarylene group of the general formula II:
CH₂=C(R)-A- (II)
in which the variable A is a substituted or unsubstituted C₆-C₂₀ arylene radical and the variable R is a hydrogen atom, a halogen atom, a nitrile group or a substituted or unsubstituted alkyl, cycloalkyl, alkylcycloalkyl, cycloalkylalkyl, aryl, alkylaryl, cycloalkylaryl, arylalkyl or arylcycloalkyl radical.

13. Effect pigment paste according to Claim 12, **characterized in that** the radical R of the formula (II) is a hydrogen atom or a methyl group, especially a methyl group.

14. Effect pigment paste according to Claim 12 or 13, **characterized in that** the arylene radical A of the formula (II) is 1,2-, 1,3- and/or 1,4-phenylene, especially 1,3-phenylene.

15. Effect pigment paste according to any one of Claims 12 to 14, **characterized in that** the ethenylarylene group (II) is joined to the polyurethane main chain via a divalent or trivalent linking radical III containing at least one urethane group and/or urea group.

16. Effect pigment paste according to Claim 15, **characterized in that** the linking radical III contains at least one of the divalent or trivalent groups of the general formulae Ilia to IIIc
-X-NH-C(O)-O- (IIIa),
-X-NH-C(O)-NH- (IIIb)
or
-X-NH-C(O)-N< (IIIc),
in which X designates a divalent organic radical.

17. Effect pigment paste according to any one of Claims 1 to 16, **characterized in that** the polyurethane prepolymer (B11) is preparable by reacting at least one compound (B122), selected from the group consisting of polyols, polyamines, and compounds containing at least one hydroxyl group and at least one amino group, with at least one polyisocyanate (B123).

18. Effect pigment paste according to any one of Claims 1 to 17, **characterized in that** the compounds (B122) are oligomers or polymers.

19. Effect pigment paste according to Claim 18, **characterized in that** the oligomers and polymers (B122) are polyesters and/or polyurethanes.

20. Effect pigment paste according to any one of Claims 1 to 19, **characterized in that** the surface-active compounds (C) each contain a polyoxyalkylene group.

21. Effect pigment paste according to any one of Claims 1 to 20, **characterized in that** the surface-active compounds (C) are derivatives of nondrying vegetable oils.

22. Effect pigment paste according to Claim 21, **characterized in that** the surface-active compounds (C) are derivatives of castor oil.

23. Process for preparing the aqueous effect pigment paste according to any one of Claims 1 to 22, **characterized in that** at least constituents (A), (B) and (C) are mixed with one another and the resulting mixture is homogenized.

24. Use of the aqueous effect pigment paste according to any one of Claims 1 to 22 and of the effect pigment paste prepared by the process according to Claim 23 for preparing sealants, adhesives and coating materials for sealing, adhesively bonding and coating substrates.

25. Use according to Claim 24, **characterized in that** the coating materials are aqueous basecoat materials.

26. Use according to Claim 25, **characterized in that** the aqueous basecoat materials serve for producing multicoat color and/or effect paint systems on primed or unprimed substrates.

27. Use according to Claim 26, **characterized in that** the multicoat color and/or effect paint systems are produced by a wet-on-wet method comprising at least the following steps:
(VI) preparing a basecoat film by applying an aqueous basecoat material to the substrate,
(VII) drying the basecoat film,
(VIII) producing a clearcoat film by applying a clearcoat material to the basecoat film, and
(IX) jointly curing at least the basecoat film and the clearcoat film.

28. Use according to any one of Claims 24 to 27, **characterized in that** the substrates are moldings, films and fibers, especially of plastic, motor vehicle bodies, industrial components, including mechanical, optical and electrical components, coils and packaging, or furniture.

## Revendications

1. Pâte aqueuse pigmentaire à effet, contenant
(A) au moins un pigment conférant un effet,
(B) au moins un copolymère greffé dispersé dans un milieu aqueux, pouvant être préparé en ce qu'on (co)polymérise par voie radicalaire au moins un monomère (a) dans une dispersion aqueuse d'au moins un polyuréthane (B1) avec au moins un groupe éthénylarylène en position latérale et/ou au moins un groupe éthénylarylène en position terminale, pouvant être préparé en ce qu'on transforme
(1) au moins un prépolymère de polyuréthane (B11), qui contient au moins un groupe isocyanate libre, avec
(2) au moins un produit d'addition (B12), qui peut être obtenu en ce qu'on transforme
(2.1) au moins un éthénylarylènemonoisocyanate (B121) et
(2.2) au moins un composé (B122), choisi dans le groupe constitué par les polyols, les polyamines et les composés contenant au moins un groupe hydroxyle et au moins un groupe amino,
l'un avec l'autre de manière telle qu'il reste au moins un groupe réactif avec isocyanate dans le produit d'addition (B12) ;
et
(C) au moins un composé tensioactif, choisi dans le groupe constitué par les dérivés polyoxyalkylène d'huiles non siccatives.

2. Pâte pigmentaire à effet selon la revendication 1, **caractérisée en ce que** les pigments à effet (A) sont choisis dans le groupe constitué par les pigments organiques et inorganiques, conférant un effet visuel, conférant un effet de couleur et visuel, à protection magnétique, électriquement conducteurs, inhibiteurs de corrosion, fluorescents et phosphorescents.

3. Pâte pigmentaire à effet selon la revendication 2, **caractérisée en ce que** les pigments à effet (A) sont choisis dans le groupe constitué par les pigments organiques et inorganiques, conférant un effet visuel et conférant un effet de couleur et visuel.

4. Pâte pigmentaire à effet selon la revendication 3, **caractérisée en ce que** les pigments (A) organiques et inorganiques, conférant un effet visuel et conférant un effet de couleur et visuel sont choisis dans le groupe constitué par les pigments à effet métallique, les pigments à effet constitués de métaux et de non-métaux et les pigments à effet non métalliques.

5. Pâte pigmentaire à effet selon l'une quelconque des revendications 1 à 4, **caractérisée en ce que** l'éthénylarylènemonoisocyanate (B121) présente la formule générale I:
CH₂=C(R)-A-X-NCO (I),
dans laquelle les variables ont la signification suivante :
A = radical C₆-C₂₀-arylène substitué ou non substitué ;
R = un atome d'hydrogène, un atome d'halogène, un groupe nitrile, un radical alkyle, cycloalkyle, alkylcycloalkyle, cycloalkylalkyle, aryle, alkylaryle, cycloalkylaryle, arylalkyle ou arylcycloalkyle substitué ou non substitué ; et
X = un radical organique divalent.

6. Pâte pigmentaire à effet selon la revendication 5, **caractérisée en ce que** le radical arylène A de formule (I) est le 1,2-phénylène, le 1,3-phénylène et/ou le 1,4-phénylène, en particulier le 1,3-phénylène.

7. Pâte pigmentaire à effet selon la revendication 5 ou 6, **caractérisée en ce que** la variable R de formule (I) représente un atome d'hydrogène ou un groupe méthyle, en particulier un groupe méthyle.

8. Pâte pigmentaire à effet selon l'une quelconque des revendications 5 à 7, **caractérisée en ce que** le radical organique divalent X de formule (I) désigne un radical C₃-C₆-alcanediyle ramifié ou non ramifié.

9. Pâte pigmentaire à effet selon la revendication 8, **caractérisée en ce que** le radical organique divalent X est le radical -C(CH₃)₂-.

10. Pâte pigmentaire à effet selon l'une quelconque des revendications 5 à 9, **caractérisée en ce que** l'éthénylarylènemonoisocyanate (B121) de formule (I) ou au moins un des éthénylarylènemonoisocyanates (B121) de formule (I) est le 1-(1-isocyanato-1-méthyléthyl)-3-(1-méthyléthényl)-benzène.

11. Pâte pigmentaire à effet selon l'une quelconque des revendications 1 à 10, **caractérisée en ce que** le polyuréthane (B1) contient des groupes fonctionnels hydrophiles, en particulier des groupes acide carboxylique et/ou des groupes carboxylate.

12. Pâte pigmentaire à effet selon l'une quelconque des revendications 1 à 11, **caractérisée en ce que** le polyuréthane (B1) contient un groupe éthénylarylène de formule générale II :
CH₂=C(R)-A- (II),
dans laquelle la variable A représente un radical C₆-C₂₀-arylène substitué ou non substitué et la variable R représente un atome d'hydrogène, un atome d'halogène, un groupe nitrile, un radical alkyle, cycloalkyle, alkylcycloalkyle, cycloalkylalkyle, aryle, alkylaryle, cycloalkylaryle, arylalkyle ou arylcycloalkyle substitué ou non substitué.

13. Pâte pigmentaire à effet selon la revendication 12, **caractérisée en ce que** le radical R de formule (II) représente un atome d'hydrogène ou un groupe méthyle, en particulier un groupe méthyle.

14. Pâte pigmentaire à effet selon la revendication 12 ou 13, **caractérisée en ce que** le radical arylène A de formule (II) est le 1,2-phénylène, le 1,3-phénylène et/ou le 1,4-phénylène, en particulier le 1,3-phénylène.

15. Pâte pigmentaire à effet selon l'une quelconque des revendications 12 à 14, **caractérisée en ce que** le groupe éthénylarylène (II) est lié à la chaîne principale du polyuréthane via un radical III de liaison, divalent ou trivalent, contenant au moins un groupe uréthane et/ou urée.

16. Pâte pigmentaire à effet selon la revendication 15, **caractérisée en ce que** le radical III de liaison contient au moins un des groupes divalents ou trivalents des formules générales IIIa à IIIc
-X-NH-C(O)-O- (IIIa),
-X-NH-C(O)-NH- (IIIb)
ou
-X-NH-C(O)-N< (IIIc),
où X désigne un radical organique divalent.

17. Pâte pigmentaire à effet selon l'une quelconque des revendications 1 à 16, **caractérisée en ce que** le prépolymère de polyuréthane (B11) peut être préparé **en ce qu'**on transforme au moins un composé (B122), choisi dans le groupe constitué par les polyols, les polyamines et les composés contenant au moins un groupe hydroxyle et au moins un groupe amino, avec au moins un polyisocyanate (B123).

18. Pâte pigmentaire à effet selon l'une quelconque des revendications 1 à 17, **caractérisée en ce que** les composés (B122) sont des oligomères ou des polymères.

19. Pâte pigmentaire à effet selon la revendication 18, **caractérisée en ce que** les oligomères et les polymères (B122) sont des polyesters et/ou des polyuréthanes.

20. Pâte pigmentaire à effet selon l'une quelconque des revendications 1 à 19, **caractérisée en ce que** les composés tensioactifs (C) contiennent à chaque fois un groupe polyoxyalkylène.

21. Pâte pigmentaire à effet selon l'une quelconque des revendications 1 à 20, **caractérisée en ce que** les composés tensioactifs (C) sont des dérivés d'huiles végétales non siccatives.

22. Pâte pigmentaire à effet selon la revendication 21, **caractérisée en ce que** les composés tensioactifs (C) sont des dérivés de l'huile de ricin.

23. Procédé pour la préparation de la pâte aqueuse pigmentaire à effets selon l'une quelconque des revendications 1 à 22, **caractérisé en ce qu'**on mélange au moins les constituants (A), (B) et (C) les uns avec les autres et on homogénéise le mélange obtenu.

24. Utilisation de la pâte aqueuse pigmentaire à effet selon l'une quelconque des revendications 1 à 22 et de la pâte pigmentaire à effet préparée selon le procédé selon la revendication 23 pour la préparation de masses d'étanchéité, d'adhésifs et d'agents de revêtement pour le bouchage, le collage et le revêtement de substrats.

25. Utilisation selon la revendication 24, **caractérisée en ce que** les substances de revêtement sont des laques de base aqueuses.

26. Utilisation selon la revendication 25, **caractérisée en ce que** les laques de base aqueuses servent à la préparation de laquages à plusieurs couches conférant une couleur et/ou un effet sur des substrats apprêtés ou non apprêtés.

27. Utilisation selon la revendication 26, **caractérisée en ce que** les laquages à plusieurs couches conférant une couleur et/ou un effet sont réalisés par un procédé humide-sur-humide, comprenant au moins les étapes de procédé suivantes :
(VI) préparation d'une couche de laque de base par application d'une laque de base aqueuse sur le substrat,
(VII) séchage de la couche de laque de base,
(VIII) préparation d'une couche de laque claire par application d'une laque claire sur la couche de laque de base et
(IX) durcissement commun au moins de la couche de laque de base et de la couche de laque claire.

28. Utilisation selon l'une quelconque des revendications 24 à 27, **caractérisée en ce que** les substrats sont des pièces façonnées, des feuilles et des fibres, en particulier en matériau synthétique, des carrosseries de véhicules automobiles, des pièces industrielles, y compris des pièces mécaniques, optiques et électrotechniques, des bobines et des emballages ou des meubles.
